# EUROPEAN PATENT APPLICATION

(11) **EP 1 675 390 A1**
(43) Date of publication of application: **28.06.2006**
(21) Application number: 05028242.5
(22) Date of filing: 22.12.2005
(51) Int. Cl.: H04N 5/445

(54) **Terminal and method for displaying digital broadcasting channel information**

(30) Priority: 27.12.2004 KR 2004113232
(71) Applicant: Samsung Electronics Co., Ltd., Suwon-si, Gyeonggi-Do (KR)
(72) Inventor: Kim, Tae-Hyung, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a terminal and method for receiving digital broadcasting and displaying channel information including image information. The terminal includes a digital broadcasting reception unit for receiving digital broadcasting channel guide information; a mobile communication unit for receiving image guide information about broadcast programs; a memory unit for storing the digital broadcasting channel guide information received through the digital broadcasting reception unit and the image guide information received through the mobile communication unit; a control unit for searching the digital broadcasting channel guide information stored in the memory unit for guide information about broadcast programs corresponding to the image guide information stored in the memory unit, and combining the searched guide information about broadcast programs with the image guide information; and a display unit for displaying the combined information.

## Description

The present invention relates to a terminal capable of receiving digital broadcasting, and more particularly to a terminal and method for displaying channel information including image information.

Electronic Program Guide (EPG) information, which is transmitted from a broadcasting center at a predetermined interval, includes titles and synopses of broadcast programs sent via corresponding channels according to time periods thereof. A terminal receives and stores EPG information in an internal memory or file system, so that a user can select and view a desired broadcast program by searching the EPG information.

However, since the EPG information is text-based, it is impossible to provide users with image information (e.g., preview contents such as a preview moving picture or still pictures) corresponding to broadcast programs. Moreover, (the amount of data capable of being transmitted is limited, when transmitting image information of broadcast programs using an EPG channel.

Accordingly, the present invention has been made to solve the above-mentioned problems occurring in the prior art.

It is the object of the present invention to provide a terminal and method for displaying channel information including image information without using an Electronic Program Guide (EPG) channel.

This object is solved by the subject matter of the independent claims.

Preferred embodiments are defined in the dependent claims.

To accomplish the above, in accordance with one aspect of the present invention, there is provided a terminal for receiving digital broadcasting and displaying digital broadcasting channel information, the terminal including: a digital broadcasting reception unit for receiving digital broadcasting channel guide information; a mobile communication unit for receiving image guide information about broadcast programs; a memory unit for storing the digital broadcasting channel guide information received through the digital broadcasting reception unit and the image guide information received through the mobile communication unit; a control unit for searching the digital broadcasting channel guide information stored in the memory unit for guide information about broadcast programs corresponding to the image guide information stored in the memory unit, and combining the searched guide information about broadcast programs with the image guide information; and a display unit for displaying the combined information.

In accordance with another aspect of the present invention, there is provided a method for displaying digital broadcasting channel information in a terminal including a digital broadcasting reception unit, the method including: receiving and storing digital broadcasting channel guide information; receiving and storing image guide information about broadcast programs; searching the stored digital broadcasting channel guide information for guide information about broadcast programs corresponding to the stored image guide information; and combining and displaying the searched guide information about broadcast programs and the image guide information.

The present invention will be more apparent from the following detailed description taken in conjunction with the accompanying drawings, in which:
FIG 1 is a block diagram illustrating a mobile terminal capable of receiving digital multimedia broadcasting (DMB), a DMB broadcasting center and a base station according to an embodiment of the present invention;
FIG 2 is a block diagram illustrating a mobile terminal's configuration according to an embodiment of the present invention;
FIG. 3 is screen shot illustrating the display of an EPG and optional data according to an embodiment of the present invention;
FIG 4 is a diagram illustrating the structure of an electronic program guide (EPG) according to an embodiment of the present invention;
FIG 5 is a diagram illustrating the data structure of image guide information according to an embodiment of the present invention;
FIG 6 is a diagram illustrating a relationship between image guide information and EPG according to an embodiment of the present invention;
FIG. 7 is a diagram illustrating the configuration of a graphic EPG table for storing image guide information according to an embodiment of the present invention;
FIG 8 is a screen shot illustrating combined image guide information and EPG information according to an embodiment of the present invention;
FIG. 9 is a screen shot illustrating a background-image slide function is performed using the image guide information according to an embodiment of the present invention; and
FIG 10 is a flowchart illustrating a method for displaying guide information about a broadcast program together with image information according to an embodiment of the present invention.

Hereinafter, a preferred embodiment of to the present invention will be described with reference to the accompanying drawings. It is to be noted that the same elements are indicated with the same reference numerals throughout the drawings. In the following description of the embodiments of the present invention, a detailed description of known functions and configurations incorporated herein will be omitted when it may obscure the subject matter of the present invention.

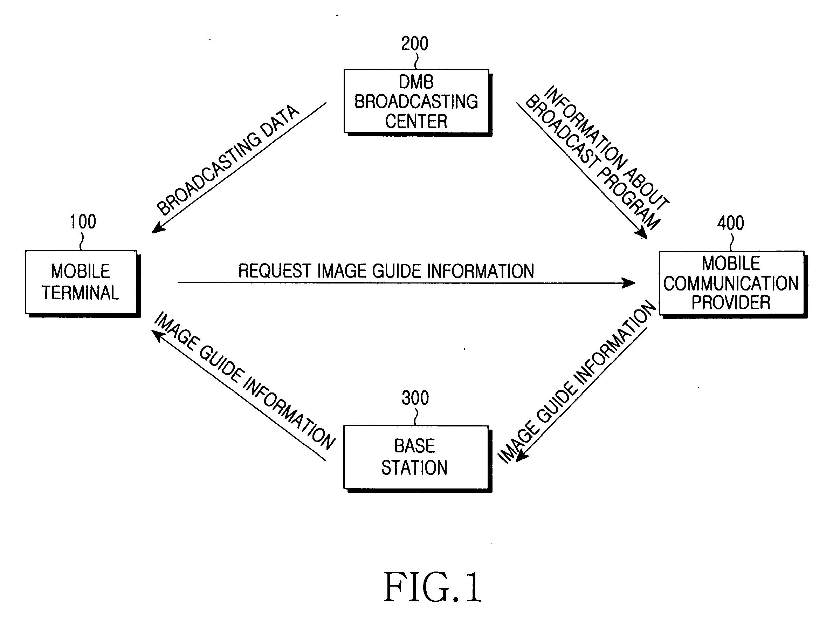

FIG. 1 is a block diagram illustrating a mobile terminal capable of receiving digital multimedia broadcasting (DMB), a DMB broadcasting center and a base station according to an embodiment of the present invention. Although the purpose of the present invention can be achieved using a mobile terminal capable of receiving digital broadcasting, it is assumed that the mobile terminal 100 shown in FIG. 1 is a mobile terminal capable of receiving DMB.

The mobile terminal 100 according to an embodiment of the present invention is a portable telephone including a function for receiving DMB, and is capable of receiving broadcasting data transmitted from a DMB broadcasting center 200, and providing a DMB broadcasting service to the user. The broadcasting data includes Electronic Program Guide (EPG) information.

A base station 300 transmits image guide information about a DMB broadcast program to the mobile terminal 100 using a data transmission scheme compatible with portable terminals such as an Evolution Data Only (EV-DO) data transmission scheme. For example, the base station 300 transmits the image guide information to the mobile terminal 100 through a multimedia message service (MMS).

When the user of the mobile terminal 100 requests an image guide information service provided from a mobile communication provider 400, the mobile communication provider 400 creates the image guide information by using information about broadcast programs provided from the DMB broadcasting center 200 and transmits the created image guide information to the mobile terminal 100 through the base station 300. The image guide information includes image information (e.g., preview contents such as a preview moving picture or one or more still pictures) about broadcast programs. The mobile communication provider 400 stores the image guide information in a multimedia message to transmit the image guide information to the mobile terminal 100 through the base station 300. Also, when the user presets broadcast programs for which the image guide information is requested, the mobile communication provider 400 may store image guide information about the broadcast programs preset by the user in a multimedia message and provide the multimedia message to the mobile terminal 100 through the base station 300 or via a wireless Intemet.

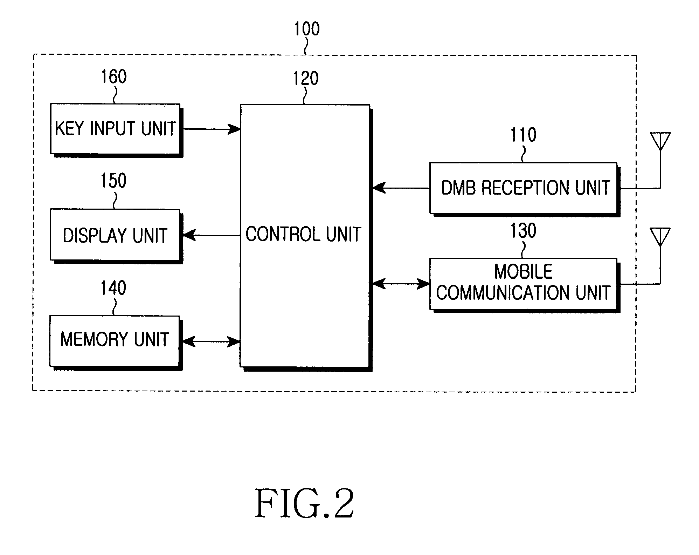

The mobile terminal 100 having received the multimedia message storing the image guide information searches EPG information stored in an internal memory or file system for guide information about broadcast programs corresponding to the image guide information. Then, the mobile terminal 100 combines the guide information of the broadcast programs with the image guide information and graphically displays the combined information. Hereinafter, the configuration of a mobile terminal 100 for providing guide information about broadcast programs graphically according to the image guide information will be described in detail with reference to the block diagram FIG. 2.

The mobile terminal 100 according to an embodiment of the present invention is a portable telephone having a function of receiving DMB data. A DMB reception unit 110 contained in the mobile terminal 100 receives broadcasting data including EPG information from the DMB broadcasting center 200 via an antenna, and provides the received broadcasting data to a control unit 120.

A mobile communication unit 130 receives multimedia message storing image guide information and signals relating to normal (e.g., voice, etc.) communication from the base station 300 via an antenna, and provides the received message and signals to the control unit 120. In addition, the mobile communication unit 130 receives the image guide information through a wireless Internet and provides the received image guide information to the control unit 120.

A memory unit 140 stores EPG information received through the DMB reception unit 110, image guide information received from the base station 300, and information relating to general functions of the mobile terminal, based on the control of the control unit 120.

A display unit 150 displays broadcasting data received through the DMB reception unit 110, and guide information about broadcast programs combined with image guide information stored in the memory unit 140, based on the control of the control unit 120. A key input unit 160, which is a user interface, receives a key input signal for operating the mobile terminal 100 from the user and provides the key input signal to the control unit 120.

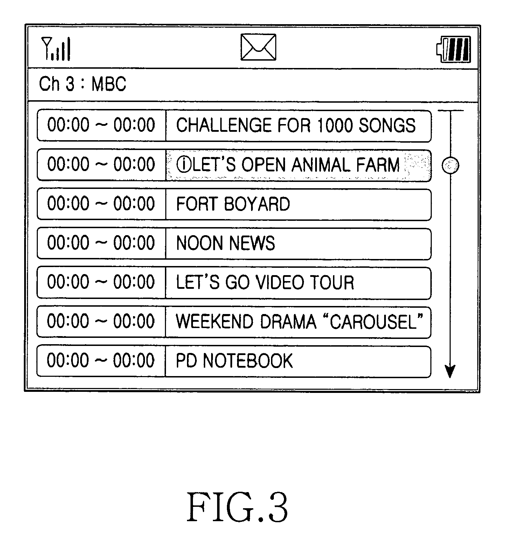

The control unit 120 searches EPG information stored in the memory unit 140 for guide information about broadcast programs corresponding to image guide information stored in the memory unit 140, combines the searched guide information about the broadcast programs with the image guide information, and displays the combined information through the display unit 150. The method for combining and displaying the searched guide information about broadcast programs and the image guide information will be described in detail with reference to FIGs. 3 through 9.

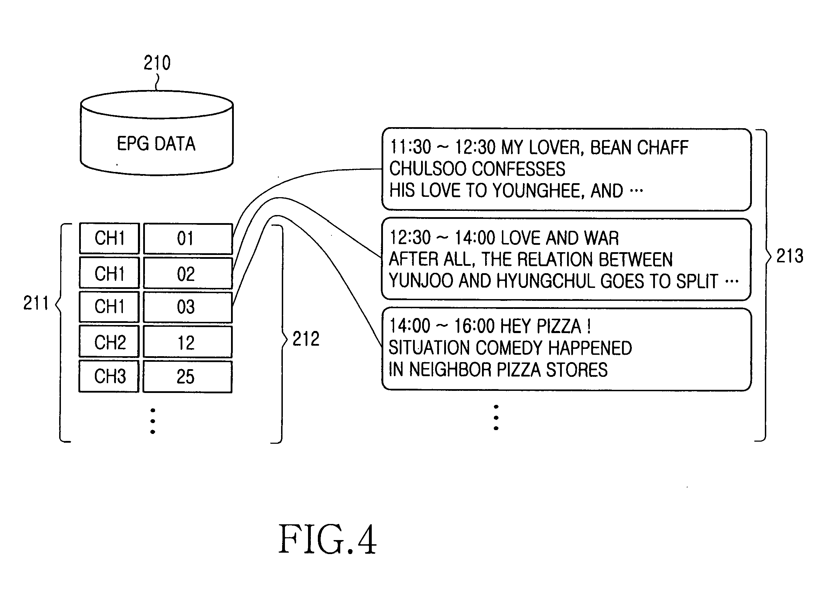

FIG. 3 is a screen shot illustrating the display of EPG information and other optional data according to an embodiment of the present invention. EPG information displayed through the display unit 150 includes information about broadcasting channel, broadcast time information, and a title list of broadcast programs based on time. Therefore, the user may check EPG information through the display unit 150 and select a broadcast program desired for viewing based on broadcasting start time, broadcasting end time and program brief information. A data structure of an EPG, which displays the titles and brief (e.g., synopses) of broadcast programs will be described with reference to FIG. 4.

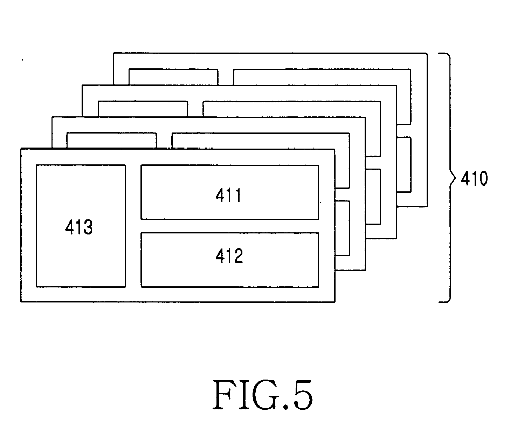

FIG. 4 is a diagram illustrating a data structure of EPG information according to an embodiment of the present invention. The data structure of EPG information 210 includes channel identifier 211 for representing channel information for each broadcast program, and program identifier 212 for representing broadcast time information, a title and brief information for each broadcast program. The program identifier 212 is an index value for representing broadcast time information, title information and brief information (e.g., synopses) 213 of broadcast programs included in EPG information. A data structure for image guide information, which is combined with the EPG information 210 to provide graphic-based broadcast program guide information, will now be described with reference to the diagram of FIG. 5.

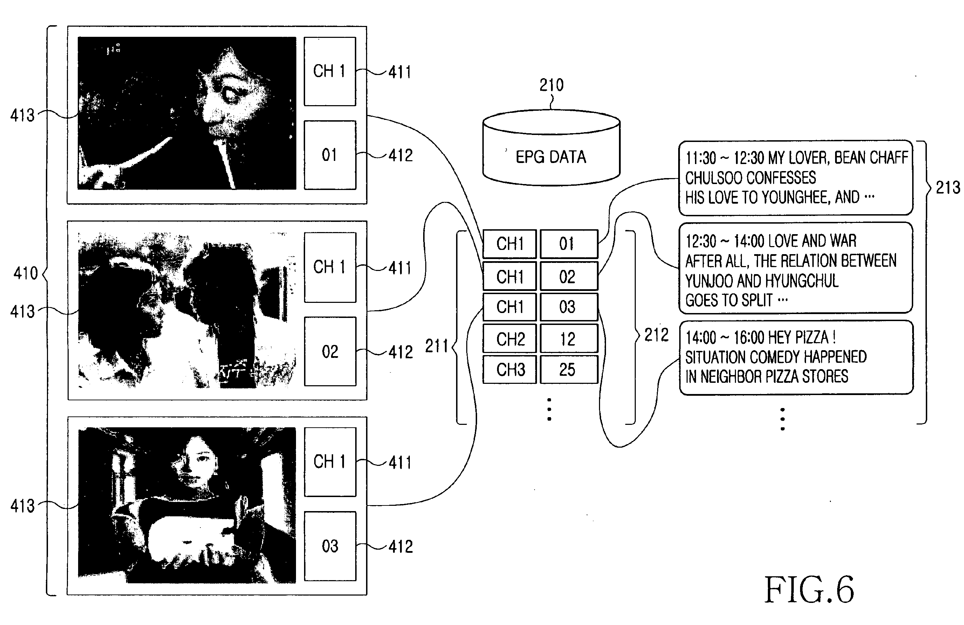

Image guide information 410 includes still/moving picture data 413 for each broadcast program, a channel identifier 411 for representing channel information for the broadcast program, and a program identifier 412 used to refer to (i.e., identify) the title and brief information of the corresponding broadcast program. A method for combining data of the image guide information 410 with information of the EPG information will now be described with reference to FIG. 6.

FIG. 6 is a diagram illustrating a relationship between image guide information and EPG information according to an embodiment of the present invention.

The channel identifier 411 and the program identifier 412 for providing information about each broadcast program, which are included in the image guide information 410, are identifiers for finding guide information about a broadcast program corresponding to each still and/or moving picture data 413. Therefore, the still and/or moving picture data 413 for each broadcast program stored in the image guide information 410 are used as a preview still and/or moving picture data for a broadcast program corresponding to the channel identifier 211 and the program identifier 212 which are identical to a corresponding channel identifier 411 and the program identifier 412.

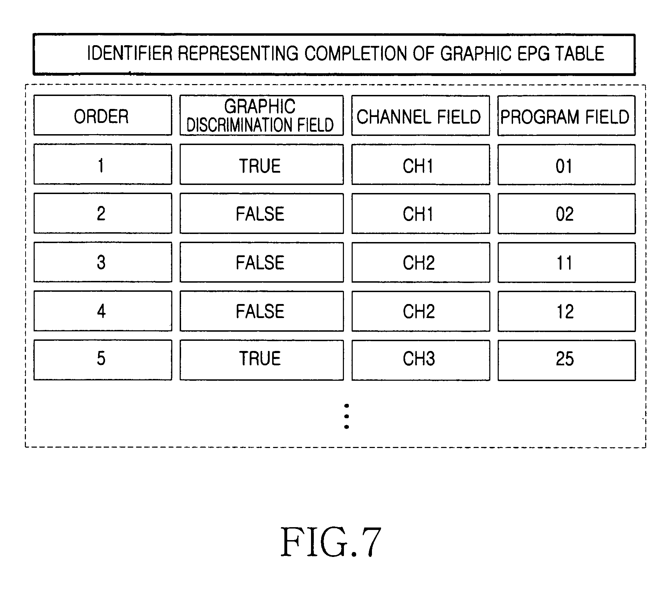

Meanwhile, the control unit 120 inputs the image guide information 410 into a graphic EPG table to store the image guide information 410 in the memory unit 140. Herein, the term "graphic EPG table" refers to a table which is established to store data included in the image guide information 410 with the data discriminated (e.g., classified) according to fields, and the graphic EPG table will be described with reference to FIG. 7.

FIG. 7 is a diagram illustrating the configuration of a graphic EPG table for storing image guide information according to an embodiment of the present invention. The graphic EPG table includes, a graphic discrimination field for indicating whether still and/or moving picture data 413 for each broadcast program included in the image guide information 410 is a still picture or a moving picture, a channel field for storing the channel identifier 411 for a broadcast program corresponding to the still and/or moving picture data 413, and a program field for storing the program identifier 412 for the broadcast program.

The control unit 120 inputs data for each broadcast program included into the image guide information 410 according to fields of the graphic EPG table. The control unit 120 sets a completion identifier in the graphic EPG table in order to indicate that data have been input into fields of the graphic EPG table according to the image guide information 410 and stores the graphic EPG table in the memory unit 140.

Also, when receiving the image guide information 410 through the mobile communication unit 130, the control unit 120 resets the completion identifier previously set in the graphic EPG table and initializes the fields of the graphic EPG table. Then, the control unit 120 inputs data according to newly-received image guide information 410 into the fields of the graphic EPG table, and sets a completion identifier in the graphic EPG table to store the graphic EPG table in the memory unit 140.

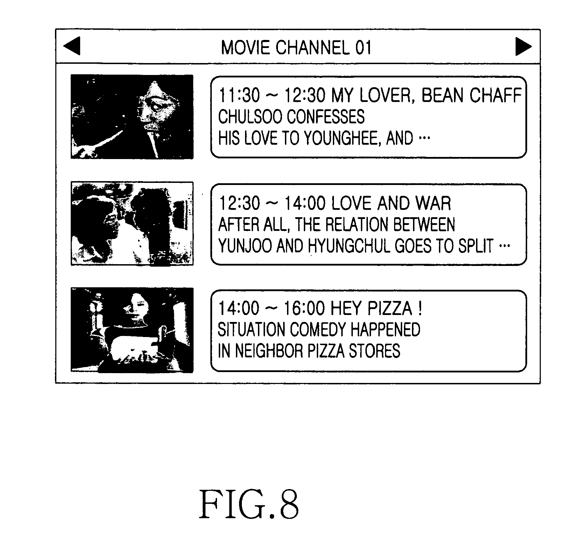

The control unit 120 searches the data structure of EPG information 210 stored in the memory unit 140 for a channel identifier 211 and a program identifier 212 which are respectively identical to a channel identifier 411 and a program identifier 412 of each broadcast program input into the channel field and program field of the graphic EPG table. Then, the control unit 120 displays still and/or moving picture data 413 for each broadcast program, together with broadcast program guide information obtained by the searched channel identifier 211 and program identifier 212. Also, the control unit 120 selects a CODEC to display the still and/or moving picture data 413 with reference to information of the graphic discrimination field of the graphic EPG table. When the image guide information 410 and the EPG 210 are combined, a screen is displayed as FIG. 8.

FIG. 8 is a screen shot illustrating combined image guide information and EPG information according to an embodiment of the present invention. The control unit 120 displays guide information about broadcast programs of a movie channel (e.g., Channel 01, as shown) together with image information (e.g., preview contents such as a preview moving picture or one or more still pictures) about the broadcast programs through the display unit 150. The image information includes still and/or moving picture data 413 included in the image guide information 410. If the user wants to check guide information about broadcast programs included in another channel, the user can select any channel using the key input unit 160 or other entry device (e.g., a touch screen, etc.)

For example, when the user pushes the right direction key on a key pad included in the key input unit 160 of the mobile terminal 100, the control unit 120 senses it, and displays guide information about broadcast programs included in a channel after the current channel (e.g., Channel 01) together with corresponding image information through the display unit 150, in the same manner as shown in FIG. 8. Also, when the user directly inputs a desired channel number by using the key pad, the control unit 120 detects the input channel, and displays guide information about broadcast programs included in a channel corresponding to the input number together with image information through the display unit 150, in the same manner as shown in FIG 8.

Besides the channel-based scheme shown in FIG 8, various schemes of displaying guide information of broadcast programs together with image information can be utilized. For instance, a scheme for displaying guide information about broadcast programs together with image information on the basis of broadcasting time and a scheme for displaying guide information about broadcast programs selected by the user together with image information can be used as desired. These displaying schemes may be provided in a menu so that the user can select a desired display scheme from the menu to receive image and guide information about broadcast programs using the desired display scheme.

Meanwhile, the user may set a background-image slide function for changing a background image in a predetermined interval of time by using the image guide information 410. When the background-image slide function using the image guide information 410 is set, the control unit 120 searches the EPG information 210 stored in the memory unit 140 for a channel identifier 211 and a program identifier 212 which are respectively identical to a channel identifier 411 and a program identifier 412 of each broadcast program included in the image guide information 410. Then, the control unit 120 extracts broadcast time information about broadcast programs corresponding to the searched channel identifier 211 and the program identifier 212, by using the program identifier 212. The control unit 120 displays the extracted broadcast time information and the still and/or moving picture data 413 of a broadcast program corresponding to the extracted broadcast time information together through the display unit 150.

In this case, the period of displaying the still and/or moving picture data 413 and broadcast time information as a background image may be adjusted, and the broadcast time information of them may be not displayed, according to the user's selection. In addition, the control unit 120 displays the still and/or moving picture data 413 and broadcast time information on time based on time stored in the mobile terminal 100. After that, the control unit 120 can change the still and/or moving picture data 413 and broadcast time information according to the broadcast time of different programs such that they are adapted for different programs. That is, although the user does not view a current broadcast program, the still and/or moving picture data 413 and broadcast time information of the current broadcast program are displayed as the background image of the mobile terminal 100, so that the user can easily view the preview information for the current broadcast program.

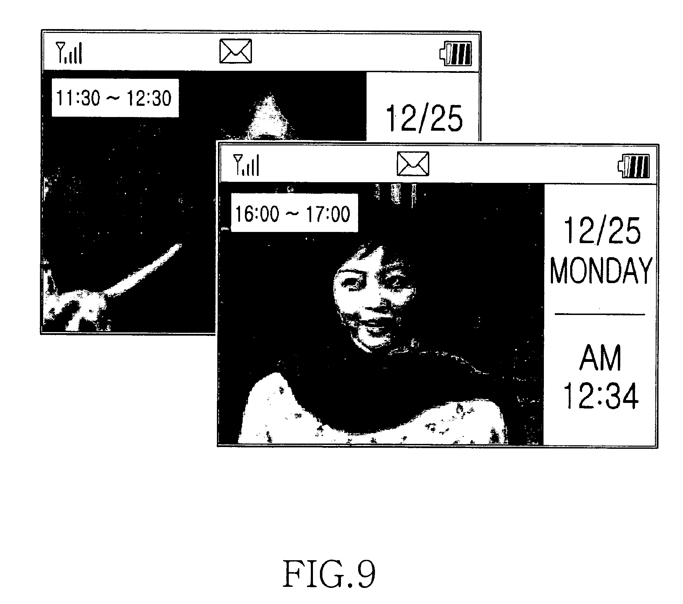

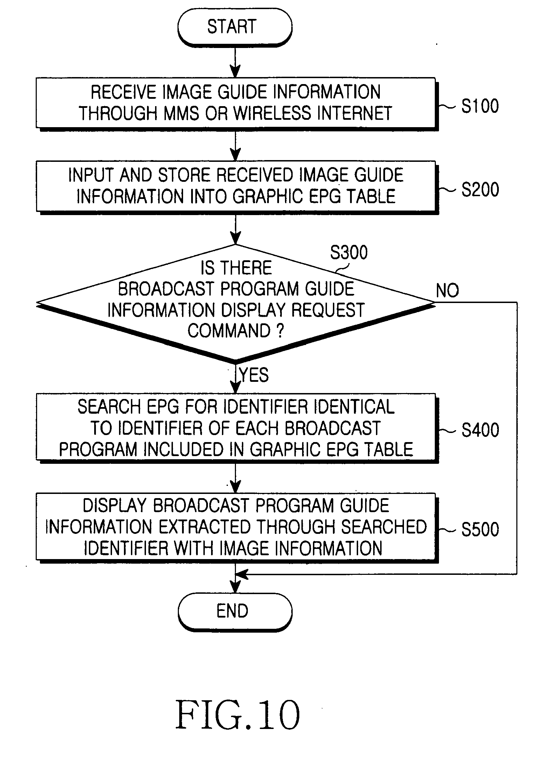

Alternatively, in order to set the background-image slide function using the image guide information 410 for changing a background image in a predetermined time interval, the control unit 120 may display the still/moving picture data 413 and broadcast time information to be displayed by extracting the displaying still and/or moving picture data 413 and broadcast time information with reference to the graphic EPG table stored in the memory unit 140. When the image guide information 410 is set to be used for a background-image slide function, images as shown in FIG 9 are displayed on the screen. Hereinafter, a method for displaying guide information about a digital broadcast program together with image information in the mobile terminal 100 shown in FIG 2 according to an embodiment of the present invention will be described in detail with reference to the flowchart of FIG. 10.

When the user of the mobile terminal 100 applies for an image guide information service provided from the mobile communication provider 400, the mobile communication provider 400 stores the image guide information 410 in a multimedia message (e.g., an MMS message) and transmits the image guide information 410 to the mobile terminal 100 through the base station 300. Also, the mobile communication provider 400 may provide the image guide information to the mobile terminal 100 through a wireless Internet.

Then, the control unit 120 of the mobile terminal 100 receives the multimedia message storing the image guide information 410 through the mobile communication unit 130 in step S100. The mobile communication unit 130 may receive the image guide information 410 through the wireless Internet and provide the image guide information 410 to the control unit 120.

When receiving the multimedia message including the image guide information 410, the control unit 120 releases a completion identifier set in the graphic EPG table into which previously-received image guide information has been input. Then, the control unit 120 initializes the fields of the graphic EPG table, inputs data according to the newly-received image guide information 410 into the fields of the graphic EPG table, sets a completion identifier in the graphic EPG table, and stores the graphic EPG table in the memory unit 140 in step S200. When the graphic EPG table is stored, the control unit 120 determines whether the user has requested a broadcast program guide information display in step S300. For example, the user can enter a broadcast program guide information display using the key input unit 160.

As a result of the determination, when it is determined that the user requests a broadcast program guide information display, the control unit 120 searches the EPG information 210 stored in the memory unit 140 for a channel identifier 211 and a program identifier 212 which are identical to a respective channel identifier 411 and program identifier 412 of each broadcast program input into the channel field and program field of the graphic EPG table in step S400.

If a channel identifier 211 and program identifier 212 identical to a respective channel identifier 411 and program identifier 412 are found, the control unit 120 displays still and/or moving picture data 413 for each broadcast program, i.e., image information, together with guide information about broadcast programs extracted through the found channel identifier 211 and program identifier 212 in step S500.

According to the present invention as described above, preview contents such as a preview moving picture or still picture for digital broadcast programs are provided through the EV-DO data transmission scheme, so that it is possible to provide an aesthetic display to the user.

Also, according to an embodiment of the present invention, since the guide information about digital broadcast programs is graphically provided as opposed to being textually provided, the user can preview image information about the broadcast programs.

Also, according to an embodiment of the present invention, since the guide information about current broadcast programs is provided as a background image, the user can easily view the preview information about the current broadcast program although the user does not view the current broadcast program.

In addition, the present invention can be utilized for Public Relations (PR) purposes and to advertise Pay Services provided as content of available digital broadcasting.

While the present invention has been shown and described with reference to certain preferred embodiments thereof, it will be understood by those skilled in the art that various changes in form and details may be made therein without departing from the scope of the invention as defined by the appended claims. Accordingly, the scope of the invention is not to be limited by the above embodiments but by the claims.

## Claims

1. A method for displaying digital broadcasting channel information in a terminal including a digital broadcasting reception unit, the method comprising the steps of:
receiving and storing digital broadcasting channel guide information;
receiving and storing image guide information about broadcast programs;
searching the stored digital broadcasting channel guide information for guide information about broadcast programs corresponding to the image guide information; and
combining and displaying the searched guide information about broadcast programs and the image guide information.

2. The method as claimed in claim 1, wherein the image guide information includes data transmitted using a data communication scheme of the terminal.

3. The method as claimed in claim 1, wherein the image guide information includes data transmitted using an MMS scheme.

4. The method as claimed in claim 1, wherein the image guide information includes data transmitted using a wireless Internet scheme.

5. The method as claimed in one of claims 1 to 4, wherein the image guide information comprises:
still-picture or moving-picture graphic data for providing graphic information about each broadcast program;
channel identifiers for representing channel information about the respective broadcast programs; and
program identifiers for searching the stored channel guide information for time and content information about the respective broadcast programs.

6. The method as claimed in claim 5, wherein the terminal includes a table which comprises:
a graphic discrimination field for indicating whether a graphic data contains moving picture data;
a channel field for storing the channel identifiers; and
a program field for storing the program identifiers,
wherein, when the image guide information is received, data included in the image guide information are stored according to the fields of the table.

7. The method as claimed in claim 6, wherein a completion identifier is set in the table when data for each broadcast program included in the received image guide information has been stored according to the fields of the table.

8. The method as claimed in claim 6 or 7, wherein, when new image guide information is received, a completion identifier of the table is reset, and thereafter the fields of the table are initialized, data for each broadcast program included in the new image guide information are stored according to the fields of the table, and the completion identifier is set.

9. The method as claimed in one of claims 6 to 8, wherein the stored digital broadcasting channel guide information is searched for guide information about broadcast programs including channel identifiers and program identifiers which are identical to channel identifiers and program identifiers stored in the channel and program fields of the table.

10. The method as claimed in claim 9, wherein the combined searched guide information about broadcast programs includes guide information of broadcast programs searched in the digital broadcasting channel guide information which is combined with corresponding graphic data for each broadcast program included in the image guide information.

11. The method as claimed in claim 10, wherein the combined searched guide information about broadcast programs includes channels, broadcasting time, content information and graphic information about digital broadcast programs.

12. The method as claimed in claim 11, wherein, when the combined searched guide information about broadcast programs is displayed, graphic information, time and content information about broadcast programs provided through a predetermined channel are displayed.

13. The method as claimed in claim 12, wherein graphic information, time and content information about broadcast programs provided through a channel according to a request for checking guide information about broadcast programs when displaying information corresponding to another channel.

14. The method as claimed in claim 11, wherein, when the combined searched guide information about broadcast programs is displayed, graphic information, channels, time and content information about broadcast programs are displayed according to broadcasting time.

15. The method as claimed in claim 11, wherein, when the combined searched guide information is displayed, graphic information, channels, time and content information about specific broadcast programs requested by a user are displayed.

16. The method as claimed in claim 11, wherein a codec capable of displaying graphic information of one of a still picture and moving picture according to the graphic discrimination field of the table is selected to display graphic information included in the combined searched guide information.

17. The method as claimed in one of claims 5 to 16, further comprising the steps of:
determining whether the image guide information is set to be used for a background-image slide function for changing a background image at a predetermined times; and
displaying still picture or moving picture graphic data as a background image based on the determination.

18. The method as claimed in claim 17, further comprising a step of adjusting a display time period for the image guide information displayed as the background image depending on a user's selection.

19. The method as claimed in claim 17, further comprising the steps of:
searching the stored digital broadcasting channel guide information for guide information about broadcast programs including channel identifiers and program identifiers which are identical to channel identifiers and program identifiers for the respective broadcast programs included in the image guide information, when it is determined that the image guide information is set to be used for the background-image slide function; and
extracting broadcast time information from among the searched guide information of broadcast programs and displaying graphic data of the image guide information as a background image at a predetermined time based on the extracted broadcast time information.

20. The method as claimed in claim 17, further comprising the steps of:
searching the stored digital broadcasting channel guide information for guide information about broadcast programs including channel identifiers and program identifiers which are identical to channel identifiers and program identifiers for the respective broadcast programs included in the image guide information, when it is determined that the image guide information is set to be used for the background-image slide function; and
extracting broadcast time information from among the searched guide information of broadcast programs and displaying the extracted broadcast time information together with graphic data of the image guide information displayed as the background image.

21. The method as claimed in claim 20, further comprising a step of adjusting a display time period for the image guide information and broadcast time information displayed as the background image depending on user's selection.

22. The method as claimed in claim 20 or 21, further comprising a step of displaying the graphic data of the image guide information and the extracted broadcast time information as the background image at a predetermined time based on the extracted broadcast time.

23. A terminal for receiving digital broadcasting and displaying digital broadcasting channel information, the terminal comprising:
a digital broadcasting reception unit for receiving digital broadcasting channel guide information;
a mobile communication unit for receiving image guide information about broadcast programs;
a memory unit for storing the digital broadcasting channel guide information received through the digital broadcasting reception unit and the image guide information received through the mobile communication unit;
a control unit for searching the digital broadcasting channel guide information stored in the memory unit for guide information about broadcast programs corresponding to the image guide information stored in the memory unit, and combining the searched guide information about broadcast programs with the corresponding image guide information; and
a display unit for displaying the combined information.

24. The terminal as claimed in claim 23, wherein the mobile communication unit receives the image guide information transmitted using a data communication scheme of the terminal.

25. The terminal as claimed in claim 23, wherein the mobile communication unit receives the image guide information transmitted using an MMS scheme.

26. The terminal as claimed in claim 23, wherein the mobile communication unit receives the image guide information transmitted using a wireless Internet scheme.

27. The terminal as claimed in one of claims 23 to 26, wherein the image guide information comprises:
still-picture or moving-picture graphic data for providing graphic information about each broadcast program;
channel identifiers for representing channel information about the respective broadcast programs; and
program identifiers for searching the stored channel guide information for time and content information about the respective broadcast programs.

28. The terminal as claimed in claim 27, wherein the memory unit includes a table which comprises:
a graphic discrimination field for indicating whether a graphic data is a moving picture;
a channel field for storing the channel identifiers; and
a program field for storing the program identifiers.

29. The terminal as claimed in claim 28, wherein the control unit distinguishes data of broadcast programs included in the image guide information received through the mobile communication unit, inputs the data of broadcast programs into the fields of the table, and stores the data of broadcast programs in the memory unit.

30. The terminal as claimed in claim 29, wherein the control unit sets a completion identifier in the table when the image guide information corresponding to the fields of the table is input.

31. The terminal as claimed in claim 30, wherein, when the control unit receives the image guide information through the mobile communication unit, the control unit resets a completion identifier of the table, initializes the fields of the table, stores data for each broadcast program included in the received image guide information according to the fields of the table, and thereafter sets the completion identifier in the table.

32. The terminal as claimed in claim 29, wherein the control unit searches the digital broadcasting channel guide information stored in the memory unit for guide information about broadcast programs including channel identifiers and program identifiers which are identical to channel identifiers and program identifiers stored in the channel and program fields of the table.

33. The terminal as claimed in claim 32, wherein the control unit combines the search guide information about broadcast programs including guide information of broadcast programs searched in the digital broadcasting channel guide information with corresponding graphic data for each broadcast program included in the image guide information to create combined information.

34. The terminal as claimed in claim 33, wherein the combined information includes channels, broadcasting time, content information and graphic information about digital broadcast programs.

35. The terminal as claimed in claim 34, wherein the control unit displays the combined information corresponding to a predetermined channel through the display unit.

36. The terminal as claimed in claim 35, further comprising a user interface unit for receiving an operation request for the terminal from a user,
wherein the control unit displays the combined information corresponding to the predetermined channel through the display unit when receiving a request for checking guide information about broadcast programs of another channel through the user interface unit.

37. The terminal as claimed in claim 34, wherein the control unit displays the combined information through the display unit according to broadcast time.

38. The terminal as claimed in claim 34, wherein the control unit displays the combined information of specific broadcast programs through the display unit when the user requests the combined information of the specific broadcast programs through the user interface unit.

39. The terminal as claimed claim 35, wherein the control unit selects a codec capable of displaying graphic information of at least one of a still and moving picture according to the graphic discrimination field of the table to display graphic graphic information included in the combined information through the display unit.

40. The terminal as claimed in claim 36, wherein, when image guide information stored in the memory unit is set to be used for a background-image slide function included in the terminal, the control unit displays graphic data of the image guide information as a background image through the display unit.

41. The terminal as claimed in claim 40, wherein the control unit receives a display time period for the image guide information displayed as the background image through the user interface unit.

42. The terminal as claimed in claim 40, wherein the control unit searches the digital broadcasting channel guide information stored in the memory unit for guide information about broadcast programs including channel identifiers and program identifiers which are identical to channel identifiers and program identifiers for the respective broadcast programs included in the image guide information, extracts broadcast time information from among the searched guide information of broadcast programs, and displays graphic data of the image guide information as a background image through the display unit at a predetermined time based on the extracted broadcast time information.

43. The terminal as claimed in claim 40, wherein the control unit searches the digital broadcasting channel guide information stored in the memory unit for guide information about broadcast programs including channel identifiers and program identifiers which are identical to channel identifiers and program identifiers for the respective broadcast programs included in the image guide information, extracts broadcast time information from among the searched guide information of broadcast programs, and displays the extracted broadcast time information through the display unit as the background image together with graphic data of the image guide information.

44. The terminal as claimed in claim 43, wherein the control unit receives a display time period for the image guide information and broadcast time information displayed as the background image through the user interface unit.

45. The terminal as claimed in claim 43 or 44, wherein the control unit displays the graphic data of the image guide information and the extracted broadcast time information, through the display unit, as the background image at a predetermined time based on the extracted broadcast time.
